Europäisches Patentamt

**European Patent Office**

**Office européen des brevets**

(19)

(11) Numéro de publication : **0 006 385**
**B1**

(12) **FASCICULE DE BREVET EUROPÉEN**

(45) Date de publication du fascicule du brevet :
03.11.82

(51) Int. Cl.³ : **E 02 B 15/04**

(21) Numéro de dépôt : **79400386.3**

(22) Date de dépôt : **12.06.79**

(54) **Perfectionnements aux appareils à palettes souples pour la récupération de matières flottantes.**

(30) Priorité : **14.06.78 FR 7817724**

(43) Date de publication de la demande :
**09.01.80 (Bulletin 80/01)**

(45) Mention de la délivrance du brevet :
**03.11.82 Bulletin 82/44**

(84) Etats contractants désignés :
**BE DE FR GB IT NL SE**

(56) Documents cités :
**CA A 959 423**
**DE A 1 634 072**
**FR A 2 229 260**
**US A 3 762 558**
**US A 3 928 206**

(73) Titulaire : **Société d'Exploitation des Procédés**
**E.G.M.O. (S.E.P. - E.G.M.O.) SARL**
**Boulevard Marfille**
**F-29283 Brest (FR)**

(72) Inventeur : **Bronnec, Jean Armand Louis**
**9, rue Q.M. Bondon**
**F-29200 Brest (FR)**

(74) Mandataire : **Chambon, Georges et al**
**Cabinet Chambon 6 et 8 avenue Salvador Allende**
**F-93804 Epinay S/Seine Cedex (FR)**

Imprimerie Jouve, 18, rue St-Denis, 75001 Paris, France

Perfectionnements aux appareils à palettes souples pour la récupération de matières flottantes

L'invention concerne les appareils de lutte contre les pollutions flottantes dont l'entrée se présente comme une pompe à palettes souples, prolongée ensuite par un élévateur à palettes.

De tels appareils sont connus, par exemple par le FR-A-2 229 260. Ils comportent une bande souple, inclinée, montée sans fin entre deux tambours d'extrémité au-dessus d'une glissière de section droite en U dont le fond est parallèle au brin inférieur à la bande, celle-ci portant une pluralité de lamelles flexibles fixées transversalement par rapport à elle et ayant une largeur sensiblement égale à celle de la glissière et une hauteur telle que leur bord transversal libre vient frotter contre le fond de ladite glissière. A la partie inférieure de l'appareil, la glissière se prolonge par une goulotte d'entrée dont les côtés latéraux sont généralement évasés et dont le fond est plat et le seuil sensiblement horizontal. Pour récupérer des matières flottantes (corps de faibles dimensions ou liquide comme le pétrole) le fond de la goulotte d'entrée est placé à faible profondeur sous les matières à récupérer, la bande est mise en mouvement par entraînement de l'un des tambours, les lamelles flexibles « lapent » la surface du plan d'eau et emprisonnent dans les alvéoles successives les produits flottants qui sont déversés à la partie supérieure de la bande par une goulotte d'évacuation, par exemple dans un bac de décantation.

Les résultats obtenus sont satisfaisants et, tout au moins, ce sont les appareils de ce type qui donnent les meilleurs résultats, notamment dans la lutte contre les « marées noires ». Toutefois leur rendement est contrarié par le contre-courant qui prend naissance au point où les lamelles flexibles prennent contact avec le plan d'eau.

L'invention a pour objet des dispositions qui réduisent de façon notable ce contre-courant.

Selon une première disposition l'invention prévoit sur le fond de la goulotte d'entrée un bossage en dos d'âne dont le sommet, destiné à être amené sous la couche flottante des matières à récupérer, est placé sensiblement à l'aplomb du point où les lamelles flexibles entrent en contact avec le plan d'eau.

Il est avantageux d'amener le sommet du bossage au voisinage immédiat de la couche flottante des matières, mais comme ce sommet doit être en même temps sensiblement à l'aplomb du point de contact susmentionné, les deux conditions ne sont théoriquement compatibles que pour une épaisseur donnée de la couche flottante. Cependant, si cette épaisseur peut varier depuis celle d'un film jusqu'à atteindre plusieurs centimètres, elle reste toujours faible et il est possible de rester dans tous les cas près des conditions optimales.

Le versant d'amont du bossage peut être quelconque mais, bien entendu, le versant d'aval doit être formé par une surface infléchie venant se raccorder au fond de la glissière.

Selon une autre disposition, pour une vitesse de défilement donnée de la bande porte-lamelles, c'est-à-dire pour une vitesse périphérique donnée des tambours, on augmente dans toute la mesure du possible le diamètre du tambour inférieur, de manière à diminuer la composante verticale de ladite vitesse périphérique à la partie inférieure dudit tambour afin de réduire la vitesse de pénétration des lamelles.

L'invention sera mieux comprise à la lecture de la description qui va suivre et à l'examen du dessin annexé dans lequel :

la figure 1 montre une disposition classique d'un appareil visé par l'invention comme par exemple selon le FR-A-2 229 260,

la figure 2 est une vue partielle d'un appareil semblable à celui de la figure 1, mais sur lequel ont été apportés les perfectionnements selon l'invention,

la figure 3 montre l'appareil avec une goulotte d'entrée articulée et,

la figure 4, le même appareil avec un asservissement en hauteur.

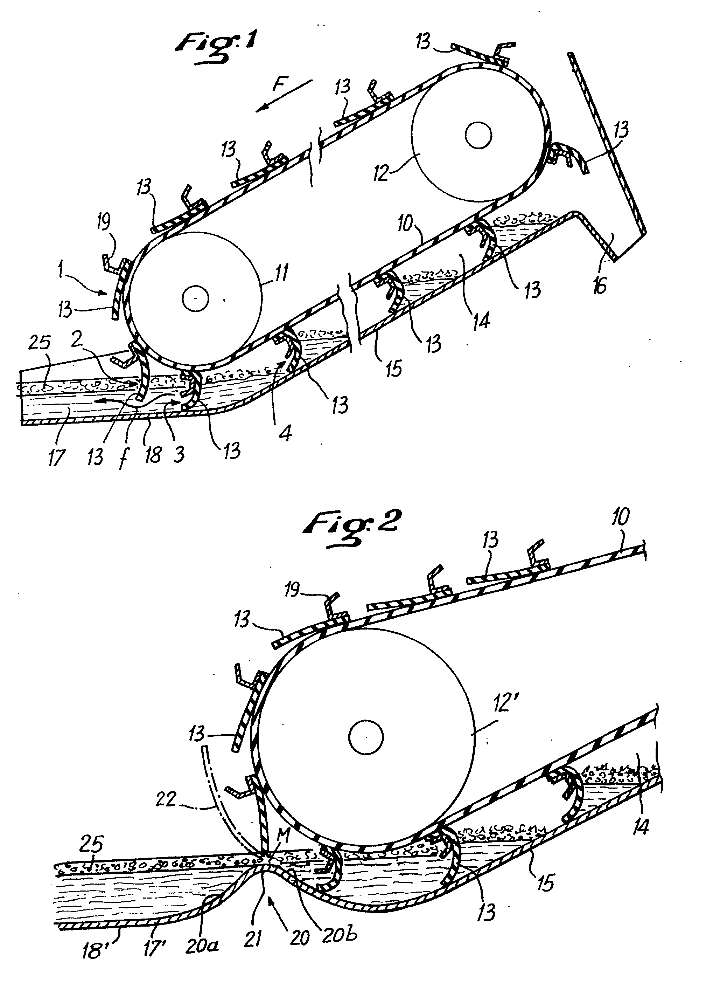

A la figure 1 un appareil de lutte contre les pollutions flottantes comporte de façon connue une bande souple 10 inclinée montée sur deux tambours d'extrémité 11 et 12 et portant une pluralité de lamelles 13 flexibles, transversales et une glissière 14 de section droite en U dont le fond 15 est parallèle au brin inférieur de la bande 10. Les lamelles 13 ont une largeur sensiblement égale à celle de la glissière 14 et une hauteur telle que leur bord transversal libre vient frotter contre le fond 15 lors de la remontée des matières flottantes. A l'extrémité supérieure de la glissière 14 est disposée une goulotte 16 d'évacuation et à son extrémité inférieure la glissière 14 se prolonge par une goulotte d'entrée 17 dont le fond 18 est plat et le seuil sensiblement horizontal. Bien entendu l'un des tambours, de préférence le tambour supérieur 12, est moteur et entraîne la bande dans le sens de la flèche F. Il faut noter que pour le ramassage des produits solides notamment, le sens de rotation peut être inversé, le ramassage étant alors effectué par les éléments rigides 19 associés respectivement à chaque lamelle 13, mais ce mode d'utilisation n'est pas concerné par la présente invention.

Il est clair qu'en amenant le fond 18 de la goulotte 17 sous la couche 25 des matières flottantes, les lamelles 13 « lapent » la partie supérieure du plan d'eau et emprisonnent les matières flottantes dans les alvéoles successifs qu'elles forment avec les parois et le fond de la glissière 14. Les matières flottantes sont ainsi élevées jusqu'à l'extrémité supérieure de la glissière 14 et se déversent par la goulotte d'évacuation 16 dans un bac de décantation non représenté.

En position 1 la lamelle 13 est tangente au tambour 11, en position 2 elle s'incurve sous l'effet de la résistance du liquide et reste ainsi

2

incurvée en position 3 quand elle commence à toucher le fond 15 de la glissière 14 et en position 4 pendant toute la remontée de la glissière 14.

Dans la position 2 et les positions voisines, de façon plus précise pour toutes les positions de la lamelle 13 comprises entre celle où le bord transversal libre de la lamelle 13 considérée prend contact avec le plan d'eau et celle où ce bord libre vient prendre appui contre le fond 15 (position 3), les filets d'eau tendent à s'échapper suivant la flèche f et créent de ce fait un contre-courant qui éloigne la nappe flottante 25 de la goulotte d'entrée 17 alors que l'on cherche à l'aspirer.

Selon l'invention, le contre-courant est diminué en disposant sur le fond 18' de la goulotte d'entrée 17' un bossage 20 interdisant tout « reflux » sous le bord libre des lamelles 13.

Il est encore possible d'améliorer le résultat en réduisant la vitesse de pénétration des lamelles 13 dans le liquide, c'est-à-dire en réduisant la composante verticale de la vitesse périphérique du tambour inférieur 12' au point où s'attache la lamelle 13 prenant contact avec le plan d'eau. Pour une position donnée du tambour inférieur 12' par rapport au plan d'eau et une vitesse donnée de défilement de la bande 10, ce résultat est atteint en augmentant le diamètre du tambour inférieur 12' dans les limites de l'encombrement admissible. A la figure 2, cet accroissement du diamètre du tambour inférieur 12' par rapport à celui du tambour supérieur est illustré par le fait que les deux brins de la bande 10 ont des directions qui convergent vers le haut.

A la figure 2 encore, le fond 18' de la goulotte 17' forme ou porte un bossage 20 en dos d'âne. Lors de la mise en place de l'appareil le sommet 21 de ce bossage 20 est amené le plus près possible de la limite inférieure de la couche flottante 25 et la hauteur du bossage 20 est telle que pour une épaisseur moyenne de ladite couche 25 ledit sommet 21 est alors sensiblement à l'aplomb du point M où le bord transversal libre des lamelles 13 entre en contact avec le plan d'eau.

Le versant d'amont 20a du bossage peut être quelconque, voire à la limite vertical, mais le versant d'aval 20b doit être en contact avec le bord transversal des lamelles le plus près possible du sommet 21.

Il faut encore, pour assurer une bonne « aspiration » de la couche flottante 25, c'est-à-dire pour interdire les contre-courants nuisibles, que le bord inférieur de chaque lamelle 13 coupe franchement ladite couche 25. Il faut donc éviter que la lamelle 13 s'incurve vers l'amont en s'appuyant sur la couche 25 polluante même si. elle est constituée par un produit épais. C'est pourquoi un mode de réalisation prévoit au moins deux guides courbes 22 étroits disposées en regard du tambour inférieur 12', ayant un centre de courbure situé sensiblement sur l'axe dudit tambour 12' et ayant chacun leur extrémité inférieure placée au voisinage immédiat du sommet du bossage 20.

Une telle disposition est représentée en traits mixtes à la figure 2 : en regard de chaque extrémité du tambour 12' est disposé un guide 22 constitué par une lame courbe de 1 à 2 cm de largeur sensiblement coaxiale dudit tambour 12' et dont l'extrémité inférieure s'étend jusqu'au voisinage du sommet 21 du bossage 20, sous le point M. Ainsi, chaque lamelle souple 13 s'engage à son tour sous les guides 22 à chacune de ses extrémités. Au moment où elle touche la surface liquide, qui tend à la recourber vers la gauche de la figure 2, elle reste maintenue jusqu'à arriver à proximité immédiate du seuil formé par le bossage 20. L'angle d'attaque de la couche polluante est ainsi parfaitement défini. La faible largeur des guides laisse à la palette la souplesse nécessaire pour « absorber » d'éventuels objets solides sans risque de blocage ou de rupture.

Comme il a été dit ci-avant, le seuil formé par le sommet 21 du bossage 20 doit être amené au voisinage imm′ídiat de la face inférieure de la couche flottante 25, il faut donc que le niveau du seuil en dessous de la surface liquide soit sensiblement constant, ce qui ne peut être réalisé sans aménagements particuliers lorsque ladite surface est agitée.

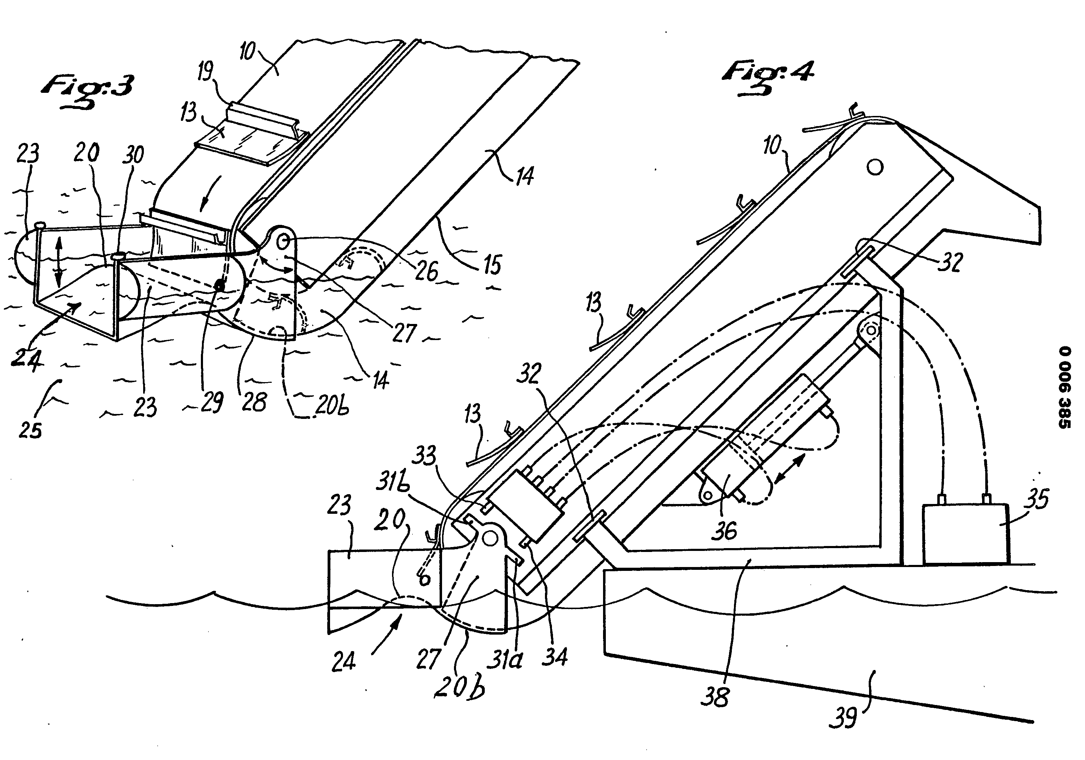

Lorsque la surface est agitée de faibles mouvements n'ayant pas pour effet de modifier en même temps la position de la barge ou autre engin flottant portant l'appareil, on peut prévoir une goulotte 24 articulée comme représenté à la figure 3. Ici, la goulotte d'entrée 24 fait partie d'une structure en tôle munie de deux flotteurs creux 23 hémicylindriques et articulée librement autour d'un axe 26 par deux oreilles 27. De préférence, l'axe d'articulation 26 coïncide sensiblement avec l'axe de rotation du tambour inférieur 12' de façon à être en même temps l'axe de la surface cylindrique 28 enveloppant la partie basse de la glissière de remontée 14 qui forme le pied du versant d'aval 20b du bossage 20.

Ainsi, le seuil de la goulotte 24 suit sensiblement les mouvements de la surface liquide en oscillant autour de l'axe 26 sous l'action des flotteurs 23. Pour faciliter le réglage initial et amener le sommet 21 du bossage 20 aussi près que possible de la face inférieure de la couche polluante 25, il est avantageux de prévoir des flotteurs 23 mobiles et réglables. A la figure 3, chaque flotteur 23 est articulé autour d'un axe 29 à l'une de ses extrémités tandis que l'autre extrémité peut être réglée en hauteur grâce à une vis 30.

Cette disposition est satisfaisante pour des creux de l'ordre de 10 à 20 cm mais difficilement au-delà. Si l'on veut compenser des enfoncements relatifs de l'engin porteur flottant allant par exemple jusqu'à 50 cm, il faut que l'appareil entier monte ou descende en suivant sensiblement le profil des vagues.

La figure 4 montre une solution à ce problème. Les flotteurs 23 commandent par l'intermédiaire de la structure de la goulotte, par exemple par des doigts 31a et 31b portés par une oreille 27, deux poussoirs 33 et 34 d'un distributeur hydraulique relié d'une part à une pompe hydraulique 35 et d'autre part à un vérin hydraulique 36 à double effet. L'ensemble de l'appareil est disposé sur des glissières 32 portées par un bâti 38 fixé à l'arrière d'une barge porteuse 39. Lorsque les flotteurs 23 descendent dans un creux de vague, ils font d'abord leur office de régulateurs de la hauteur du seuil de la goulotte 24, puis au-delà d'une certaine amplitude du basculement, le doigt 31a actionne le poussoir 34 et le distributeur admet la pression hydraulique dans la chambre supérieure du vérin 36 en commandant ainsi la descente de l'appareil le long des glissières 32. Le phénomène inverse se produit si les flotteurs montent : le doigt 31b actionne le poussoir 34, la chambre inférieure du vérin 36 est alimentée et l'appareil remonte le long des glissières 32.

Bien entendu, tout autre système que les glissières 32 peut être envisagé, par exemple un axe de rotation à la partie supérieure, le vérin commandant alors le pivotement autour de cet axe.

Le groupe motopompe 35 peut être le même que celui alimentant un moteur hydraulique d'entraînement de la bande 10 et, surtout dans ce dernier cas, il est avantageux de prévoir pour ce groupe un accumulateur d'énergie, par exemple du type à air comprimé et membrane, afin d'obtenir des réactions plus rapides du vérin.

**Revendications**

1. Appareil de récupération de matières flottantes qui comporte une bande souple (10), inclinée, montée sans fin entre deux tambours (12, 12') d'extrémité au-dessus d'une glissière (14) dont le fond (15) est parallèle au brin inférieur de ladite bande (10), portant une pluralité de lamelles flexibles (13) fixées transversalement par rapport à elle et qui présentent une largeur sensiblement égale à celle de la glissière (14) et une hauteur telle que leur bord transversal libre vient frotter contre le fond (15) de ladite glissière (14), cette dernière étant prolongée à sa partie inférieure par une goulotte d'entrée (17', 24) avec fond (18') dont le seuil est sensiblement horizontal, caractérisé en ce que le fond (18') de la goulotte d'entrée (17') présente un bossage (20) en dos d'âne dont le sommet (21), destiné à être amené sous la couche flottante (25) des matières à récupérer, est disposé sensiblement à l'aplomb du point (M) où le bord transversal libre des lamelles flexibles (13) entre en contact avec le plan d'eau.

2. Appareil de récupération de matières flottantes selon la revendication 1, caractérisé en ce que le diamètre du tambour inférieur (12') est plus grand que celui du tambour supérieur (12) afin de diminuer la vitesse de pénétration des lamelles (13) dans le liquide.

3. Appareil de récupération de matières flottantes selon l'une des revendications 1 et 2, caractérisé en ce qu'au moins deux guides courbes (22) étroits sont disposés en regard du tambour inférieur (12'), qu'ils sont sensiblement coaxiaux audit tambour (12) et que chacun a son extrémité inférieure située au voisinage immédiat du sommet (21) du bossage (20).

4. Appareil de récupération de matières flottantes selon l'une des revendications 1 et 2, caractérisé en ce que la goulotte d'entrée (24) avec son bossage (20), constitue une structure munie de flotteurs (23) et articulée librement autour d'un axe (26) à la base de la glissière (14) de remontée.

5. Appareil de récupération de matières flottantes selon la revendication 4, caractérisé en ce que l'axe d'articulation (26) de la goulotte d'entrée (24) coïncide sensiblement avec l'axe de rotation du tambour inférieur (12').

6. Appareil de récupération de matières flottantes selon l'une des revendications 4 et 5, caractérisé en ce que l'ensemble de l'appareil est monté sur un bâti (38) de manière telle qu'au moins son extrémité inférieure portant la goulotte d'entrée (24) articulée peut être réglée en hauteur par rapport à la surface du plan d'eau.

7. Appareil de récupération de matières flottantes selon la revendication 6, caractérisé en ce que les mouvements de l'appareil par rapport au bâti (38) sont commandés par le basculement de la goulotte d'entrée (24) dans un sens ou dans l'autre, par l'intermédiaire du distributeur d'un vérin hydraulique (36).

8. Appareil de récupération de matières flottantes selon la revendication 7, caractérisé en ce que le vérin hydraulique (36) est alimenté par un groupe motopompe (35) commun avec le moteur hydraulique d'entraînement de la bande (10) et que ce groupe est associé à un accumulateur d'énergie.

**Claims**

1. Apparatus for picking up floating substances which comprises an inclined flexible belt (10) fitted endlessly between two end drums (12, 12') over a chute (14) the bottom (15) of which is parallel with the lower run of said belt (10), carrying a plurality of flexible blades (13) fixed transversely in relation to it and which are of a width substantially equal to that of the chute (14) and of a height such that their free transverse edge rubs against the bottom (15) of said chute (14), the latter being extended at its lower end by an inlet channel (17', 24) with a bottom (18') the sill of which is substantially horizontal, characterised in that the bottom (18') of the inlet channel (17') exhibits a hump-shaped bulge (20) the top (21) of which, designed to pass under the floating layer (25) of substances to be picked up, is disposed substantially plumb with the point (M) at which the free transverse edge of the flexible blades (13) comes into contact with the water.

2. Apparatus for picking up floating substances as in claim 1, characterised in that the diameter of the lower drum (12') is greater than that of the upper drum (12) in order to reduce the speed at which the blades (13) enter the liquid.

3. Apparatus for picking up floating substances as in one of claims 1 and 2, characterised in that at least two narrow curved guides (22) are disposed facing the lower drum (12'), in that they are substantially coaxial with said drum (12) and in that each has its lower end located in the immediate vicinity of the top (21) of the bulge (20).

4. Apparatus for picking up floating substances as in one of claims 1 and 2, characterised in that the inlet channel (24) with its bulge (20) constitutes a structure which is fitted with floats (23) and articulates freely about an axis/shaft (26) at the base of the pick-up chute (14).

5. Apparatus for picking up floating substances as in claim 4, characterised in that the axis of articulation (26) of the inlet channel (24) substantially coincides with the axis of rotation of the lower drum (12').

6. Apparatus for picking up floating substances as in one of claims 4 and 5, characterised in that the entire apparatus is mounted on a frame (38) in such a way that at least its lower end carrying the articulated inlet channel (24) can be adjusted in height relative to the surface of the water.

7. Apparatus for picking up floating substances as in claim 6, characterised in that the movements of the apparatus relative to the frame (38) are controlled by tilting the inlet channel (24) in one or orther direction through the intermediary of the distributor of a hydraulic jack (36).

8. Apparatus for picking up floating substances as in claim 7, characterised in that the hydraulic jack (36) is supplied by a motor-pump unit (35) in common with the hydraulic motor driving the belt (10) and in that this unit is linked with an energy accumulator.

**Ansprüche**

1. Apparat zum Einsammeln schwimmender Materialien, der ein biegsames, geneigtes, zwischen zwei Außentrommeln (12, 12') über einer Rutsche (14) montiertes Endlosband (10) umfaßt, deren Boden (15) parallel zum unteren Teil des Bandes (10) ist, eine Anzahl flexibler, quer dazu befestigter Lamellen (13) tragend, die eine im wesentlichen gleiche Breite wie die der Rutsche (14) und eine solche Höhe aufweisen, daß ihr freier Querrand am Boden (15) der Rutsche (14) reibt, welch letztere an ihrem unteren Teil durch eine Rinne (17', 24) mit einem Boden (18') verlängert ist, deren Bodenschwelle praktisch horizontal ist, daduch gekennzeichnet, daß der Boden (18') der Rinne (17') einen Eselsrücken-Vorsprung (20) aufweist, dessen Gipfel (21), dazu bestimmt, unter die schwimmende Schicht (25) aus einzusammelnden Materialien geführt zu werden, praktisch senkrecht unter dem Punkt (M) angeordnet ist, wo der freie Querrand der flexiblen Lamellen (13) mit dem Wasserspiegel in Berührung tritt.

2. Apparat zum Einsammeln schwimmender Materialien nach Anspruch 1, dadurch gekennzeichnet, daß der Durchmesser der unteren Trommel (12') größer als der der oberen Trommel (12) ist, um die Eindringgeschwindigkeit der Lamellen (13) in die Flüssigkeit zu verringern.

3. Apparat zum Einsammeln schwimmender Materialien nach einem der Ansprüche 1 und 2, dadurch gekennzeichnet, daß wenigstens zwei schmale Bogenführungen (22) zur unteren Trommel (12') angeordnet sind, die zur Trommel (12) praktisch koaxial sind, und daß jede ihr unteres Ende in unmittelbarer Nachbarschaft zum Gipfel (21) des Vorsprungs (20) zu liegen hat.

4. Apparat zum Einsammeln schwimmender Materialien nach einem der Ansprüche 1 und 2, dadurch gekennzeichnet, daß die Rinne (24) mit ihrem Vorsprung (20) eine mit Schwimmern (23) bewehrte und frei um eine Achse (26) unten an der Aufstiegsrutsche (14) angelenkte Struktur darstellt.

5. Apparat zum Einsammeln schwimmender Materialien nach Anspruch 4, dadurch gekennzeichnet, daß die Anlenkachse (26) der Rinne (24) praktisch mit der Rotationsachse der unteren Trommel (12') zusammenfällt.

6. Apparat zum Einsammeln schwimmender Materialien nach einem der Ansprüche 4 und 5, dadurch gekennzeichnet, daß der ganze Apparat so auf einem Gestell (38) montiert ist, daß wenigstens sein unteres, die angelenkte Rinne (24) tragendes Ende bezüglich des Wasserspiegels in der Höhe eingestellt werden kann.

7. Apparat zum Einsammeln schwimmender Materialien nach Anspruch 6, dadurch gekennzeichnet, daß die Bewegungen des Apparats relativ zum Gestell (38) durch das Schwingen der Rinne (24) im einen oder im anderen Sinne vermittels des Steuerschiebers eines Hydraulikzylinders (36) gesteuert werden.

8. Apparat zum Einsammeln schwimmender Materialien nach Anspruch 7, dadurch gekennzeichnet, daß der Hydraulikzylinder (36) von einem Motorpumpenaggregat (35) gemeinsam mit dem hydraulischen Antriebsmotor des Bandes (10) gespeist wird und daß dieses Aggregat mit einem Kraftspeicher verbunden ist.

Fig.1

Fig.2

Fig.3

Fig.4

0 006 385